# EUROPEAN PATENT APPLICATION

(11) **EP 4 546 521 A1**
(43) Date of publication of application: **30.04.2025**
(21) Application number: 23206203.4
(22) Date of filing: 26.10.2023
(51) Int. Cl.: H01M 50/204, H01M 50/258, H01M 10/6568, F16L 5/02, F16L 21/00, F16L 21/02, F16L 21/035, F16L 37/088, F16L 55/11

(54) **ARRANGEMENT AND METHOD FOR THERMAL MANAGEMENT IN A BATTERY PACK**

(71) Applicant: VOLVO TRUCK CORPORATION, 405 08 Göteborg (SE)
(72) Inventor: LUNDIN, Robert, SE-417 29 GÖTEBORG (SE)
(74) Representative: Kransell & Wennborg KB

(57) **Abstract**

A thermal management arrangement (100) for a battery pack (202), the arrangement (100) comprising:
a housing (204) arranged to accommodate the battery pack (202),
a port arrangement (210) comprising at least one port (212), the port (212) being arranged to allow for a heat-transfer medium to flow between an interior (206) and exterior (208) of the housing (204),
an adapter (104) arranged to be connected to the port (212) for allowing the heat-transfer medium to flow from the interior (206) of the housing (204) to an interior of a further housing arranged to accommodate a further battery pack, and
a hose connector (106) arranged to be connected to the port (212) for allowing a heat-transfer medium supply hose to be connected to the port (212).

## Description

### TECHNICAL FIELD

The disclosure relates generally to thermal management. In particular aspects, the disclosure relates to an arrangement and method for thermal management in a battery pack. The disclosure can be applied to heavy-duty vehicles, such as trucks, buses, and construction equipment, among other vehicle types. The invention may also be applied to stationary implementations, marine vessels or similar. Although the disclosure may be described with respect to a particular vehicle, the disclosure is not restricted to any particular vehicle.

### BACKGROUND

Batteries, such as rechargeable lithium-ion batteries, are increasingly used to store energy in a variety of applications. When the batteries are used in high-demand applications, such as in the propulsion of electric heavy vehicles, the batteries may be divided into two or more battery packs. Each battery pack comprising a plurality of battery cells.

When the battery packs are charged or recharged, heat is developed within the battery pack which could potentially damage the battery. There are also situations in which the battery pack needs to be heated to function optimally.

The cooling and heating of the battery pack is sometimes referred to as thermal management. One known thermal management method includes the circulation of a heat-transfer medium within the battery packs. When the battery comprises more than one battery pack, it might be desired to allow the heat-transfer medium to circulate between the packs.

However, known solutions for allowing the heat-transfer medium to circulate between the battery packs provides a limited installation flexibility. There is thus need for an improved battery pack thermal management arrangement.

### SUMMARY

According to a first aspect of the disclosure, a thermal management arrangement for a battery pack is disclosed, the arrangement comprising a housing arranged to accommodate the battery pack; a port arrangement comprising at least one port, the port being arranged to allow for a heat-transfer medium to flow between an interior and exterior of the housing; an adapter arranged to be connected to the port for allowing the heat-transfer medium to flow from the interior of the housing to an interior of a further housing arranged to accommodate a further battery pack; and a hose connector arranged to be connected to the port for allowing a heat-transfer medium supply hose to be connected to the port.

The first aspect of the disclosure may seek to provide an improved thermal management arrangement in a battery pack. A technical benefit may include that a thermal management arrangement is provided which allows a heat-transfer medium to be transported between the battery pack and a supply and/or between the battery pack and further battery packs, while still allowing for flexibility in the installation and configuration of the thermal management arrangement and the battery pack(s) with regards to the application at hand.

Specifically, as both the adapter and the hose connector are allowed to be connected to the same port, the thermal management arrangement can be configured in a plurality of different ways by choosing which one of the adapter and the hose connector that should be arranged in the port.

Optionally in some examples, including in at least one preferred example, the thermal management arrangement further comprises a plug arranged to be connected to the port for preventing the flow of heat-transfer medium through the port.

Thereby, by further providing a plug adapted to be arranged in the port to stop the flow of heat-transfer medium through the port, even more possibilities to adapt the arrangement to the application at hand are provided.

Optionally in some examples, including in at least one preferred example, the housing arranged to accommodate the first battery pack comprises four side sections, a top section and a bottom section, wherein the port arrangement comprises at least two ports arranged to allow the heat-transfer medium to flow through at least two different sections of the housing.

A technical benefit may include that the possibilities to adapt the arrangement to the application at hand are further improved. For example, the hose connector could be arranged in a first port to allow for supply of heat-transfer medium to the battery pack, while the adapter could be arranged in the second port, to transfer the heat-transfer medium to a further battery pack. By providing the ports such that the heat-transfer medium is allowed to flow through different sections of the housing, the possibility to adapt the installation to limited spaces is improved, as a modular solution is provided.

Optionally in some examples, including in at least one preferred example, the housing arranged to accommodate the battery pack comprises at least four ports arranged to allow the heat-transfer medium to flow through at least four different sections of the housing.

A technical benefit may include that the possibilities to adapt the arrangement to the application at hand are further improved. For example, the hose connector could be arranged in a first port to allow for supply of heat-transfer medium to the battery pack, the adapter could be arranged in the second port to allow transfer of the heat-transfer medium to a further battery pack, and a plug could be provided in a third port to stop the flow through that port. By providing the ports such that the heat-transfer medium is allowed to flow through different sections of the housing, the possibility to adapt the installation to limited spaces is improved.

Optionally in some examples, including in at least one preferred example, each port is arranged at a location of two adjacent sections where the two adjacent sections form a corner of the housing.

A technical benefit may include that the ports could be arranged to transport the heat-transfer medium through a plurality of different sections of the housing, while still minimizing the distance between the ports of the battery pack. This could for example allow transport of the heat-transfer medium from a hose connector arranged in one port of the battery pack to an adapter arranged in another port of the battery pack, while minimizing the distance that the heat-transfer medium would have to travel through the battery pack.

Optionally in some examples, including in at least one preferred example, the adapter is a male-male adapter.

A technical benefit may include that a simple construction for the ports is allowed, where the male-male adapter could simply be pushed into the ports.

Optionally in some examples, including in at least one preferred example, the adapter comprises a seal member.

A technical benefit may include that leakage from the thermal management arrangement is prevented.

Optionally in some examples, including in at least one preferred example, the seal member is an O-ring.

A technical benefit may include that a simple and cost-efficient seal member is provided which could be fitted into a track of the male-male adapter.

Optionally in some examples, including in at least one preferred example, the hose connector comprises a spigot member adapted to be connected to a hose, and a connecting member adapted to be connected to the port, the connecting member being a male connecting member.

A technical benefit may include that the connecting member could be constructed as a standard part fitting into the ports of the arrangement, while the spigot member could be exchanged depending on the application at hand.

Optionally in some examples, including in at least one preferred example, the port arrangement is arranged to form part of the housing.

A technical benefit may include that the number of parts of the arrangement is minimized, as the port arrangement could be constructed with the housing.

Optionally in some examples, including in at least one preferred example, the battery comprises at least said further battery pack arranged to be accommodated in said further housing, said further housing comprising a port arrangement, the adapter being arranged to be connected to a port of the port arrangement of said further housing.

A technical benefit may include that more power can be provided, while allowing the battery packs to be connected to a common heat-transfer medium supply in a modular way.

According to a second aspect of the disclosure, a vehicle comprising the thermal management arrangement according to the first aspect is disclosed.

According to a third aspect of the disclosure, a method for thermal management in a thermal management arrangement in a battery pack is disclosed, the thermal management arrangement comprising a housing arranged to accommodate the battery pack; and a port arrangement comprising at least one port, the port being arranged to allow for a heat-transfer medium to flow between an interior and exterior of the housing. The method comprising arranging an adapter in a first port of the port arrangement for allowing the heat-transfer medium to flow from the interior region of the first battery pack to an interior region of a further battery pack, and
arranging a hose connector to a second port of the port arrangement for allowing for a heat-transfer medium supply hose to be connected to the port. The adapter and the hose connector are adapted to be interchangeably arranged to the first port and the second port.

The effects of the third aspect are largely analogue to those of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a battery comprising an exemplary thermal management arrangement according to an example.
**FIG. 2** is a perspective view of an exemplary thermal management arrangement according to an example.
**FIG. 3** is an exploded perspective view of an exemplary thermal management arrangement according to an example, and
**FIG. 4** in a method for thermal management in a battery pack according to an example.

### DETAILED DESCRIPTION

The detailed description set forth below provides information and examples of the disclosed technology with sufficient detail to enable those skilled in the art to practice the disclosure.

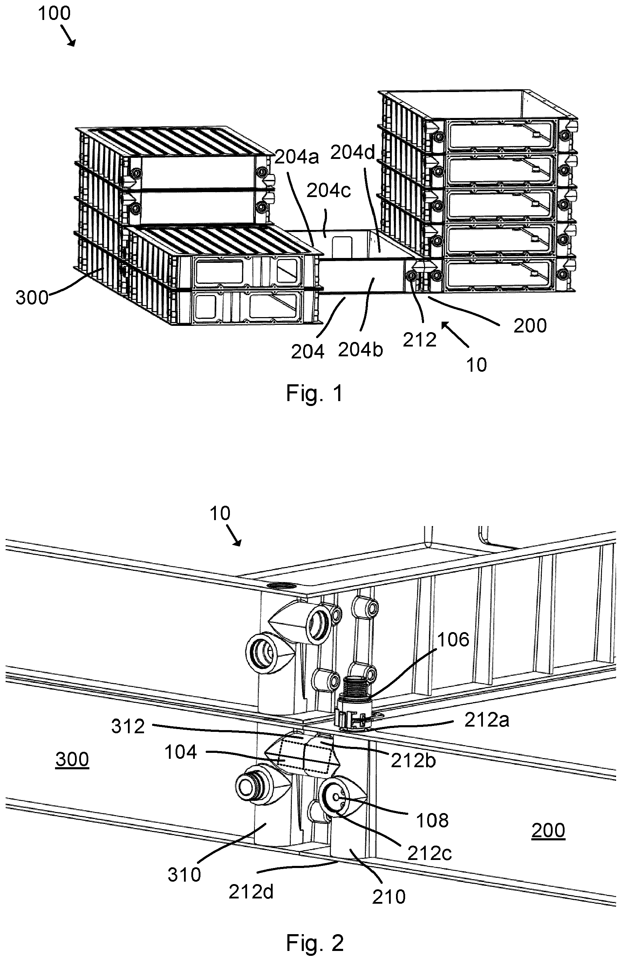

**FIG. 1** shows a battery 100 comprising an exemplary thermal management arrangement 10 according to an example. The battery 100 in **FIG. 1** comprises a plurality of battery packs 200, 300. In **FIG. 1****,** the battery 100 is exemplified as comprising twelve battery packs 200, 300 but it could include any number of battery packs. Each battery pack, such as a first battery pack 200, comprises a housing 204 for accommodating the battery pack, including a plurality of battery cells. The housing 204 comprises four side sections 204a-d. For clarity, the battery packs 200, 300 are in **FIG. 1** illustrated without the battery cells.

The first battery pack 200 comprises a thermal management arrangement 10 which is partly shown in **FIG. 1****.** The thermal management arrangement 10 comprises a port arrangement 210 comprising a plurality of ports 212, the ports allowing for a heat-transfer medium to flow from the first battery pack 200 to a further battery pack 300, thus allowing the same heat-transfer medium to be used for more than one battery pack 200, 300 of the battery 100. The heat-transfer medium could for example be air, water or any other fluid suitable for transferring heat to and from the battery cells.

The ports 212 of the thermal management arrangement 10 are in turn fluidically connected to a heat-transfer structure within the battery pack 200 for allowing the heat-transfer medium to be set into thermal contact with the battery cells therein. The heat-transfer structure is not visible in **FIG. 1** but could in one example be cooling channels extending across the top and bottom surfaces of the housing 204. The heat-transfer structure could also be construed in other ways, such as structures allowing for immersion of the battery cells or as conductive structures arranged between the battery cells.

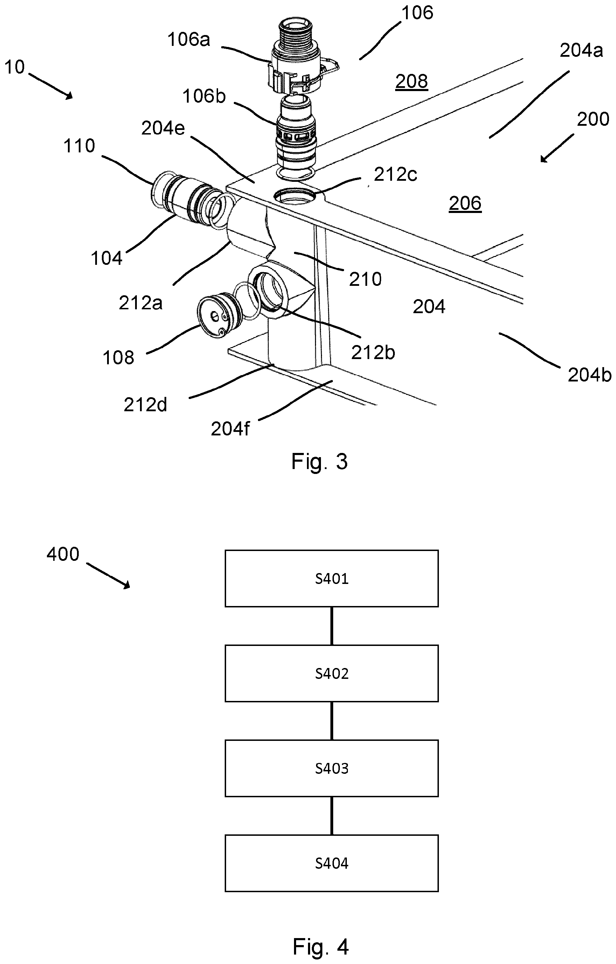

The thermal management arrangement 10 further comprises adapters, hose connectors and plugs arranged to be connected to the port arrangement 210 of the battery pack 200. These will be further explained in relation to **FIG. 2** and **FIG. 3****.**

**FIG. 2** is a perspective view of an exemplary thermal management arrangement 10 according to an example. The thermal management arrangement shown in **FIG. 2** comprises a port arrangement 210 comprising a plurality of ports 212a-d arranged in a first battery pack 200. Arranged to at least ports 212a-c are members for controlling the flow of heat-transfer medium to, in and from the battery pack 200. In the example shown in **FIG. 2****,** a hose connector 106 is connected to port 212a, a (hidden) adapter 104 is connected to port 212b and a plug 108 is connected to port 212c.

The hose connector 106 allows connection of a heat-transfer medium supply hose to the thermal management arrangement 10. The hose connector thus provides an inlet and/or outlet to the thermal management arrangement 10 where heat-transfer medium from an external source can be introduced to and/or transported away from the thermal management arrangement 10.

The adapter 104 is arranged to connect the port 212b of the battery pack 200 to a port 312 of a port arrangement 310 of a further battery pack 300. The adapter 104 thus comprises a first side and a second side adapted to be fitted into the ports of the battery packs 200, 300 and a channel extending through the connector to allow the heat-transfer medium to be transferred from the first battery pack 200 to the further battery pack 300.

The plug 108 is arranged to stop the flow of heat-transfer medium through the port 212c. The plug is thus used when no flow is desired through a port, such as when the port does neither face any other pack and is nor to be used for supply of heat-transfer medium from a heat-transfer medium source.

In the example of **FIG. 2** a flow of heat-transfer medium would thus be allowed to be supplied through the port 212a, flow through port 212a and further through the adapter 104 to the inside of the further battery pack 300. Additional adapters could be arranged to the porta arrangement 310 of the further battery pack 300 to allow a continuation of the flow of heat-transfer medium.

The hose connector 106, the adapter 104 and the plug 108 are each compatible with all ports 212 of the battery pack 200, and with further ports of further battery packs of the battery 100, such as further battery pack 300. The thermal management arrangement is thus modular, allowing the battery packs 200, 300 to be configured in a large variety of configurations and thus allowing the battery 100 to be adapted to the application at hand, e.g., based on space limitations or cooling requirements. For example, if it where desired to reduce the height of the battery 100 shown in **FIG. 2** due to space limitation, the battery pack arranged on top of the further battery pack 300 could instead be arranged at the same horizontal level as battery packs 200, 300 and be connected to port 212c by exchanging the plug 108 for an adapter 106.

**FIG. 3** is an exploded view of an exemplary thermal management arrangement according to an example. **FIG. 3** shows further details of the battery pack 200, the hose connector 106, the adapter 104 and the plug 108.

As shown in **FIG. 3****,** the battery pack 200 comprises a housing 204 separating an interior 206 and an exterior 208 of the battery pack. The housing comprises at least two adjacent side sections 204a-b, a top section 204e and a bottom section 204f. Although not shown in **FIG. 3****,** the housing 204 also comprises side sections 204c and 204d opposite to the side sections 204a-b. **FIG. 3** further shows a port arrangement 210 comprising a first port 212a arranged in the first side section 204a, a second port 204b arranged in the second side section 204b, a third port 212c arranged in the top section 204e and a fourth (hidden) port 212d arranged in the bottom section 204f.

In the example shown in **FIG. 3****,** an adapter 104 is arranged in the first port 212a, a plug 108 is arranged in the second port 212b, and a hose connector 106 is arranged in the third port 212c. The arrangement shown in **FIG. 3** is thus at least adapted to receive heat-transfer medium from a supply through port 212c using the hose connector 106, to stop the flow of heat-transfer medium through port 212b using the plug 108, and to transport the heat-transfer medium to a further battery pack through the port 212a using the adapter 104.

The hose connector 106 shown in **FIG. 3** comprises a spigot member 106a and a connecting member 106b. The connecting member 106b is adapted to be inserted into the ports 212 of the port arrangement 210 and is in this case a male connecting member. The connecting member 106b is provided with a seal member for preventing leakage from the port 212 where the hose connector 106 is arranged. The connecting member 106b may further comprise a clamping or locking member for securing the hose connector 106 to the port 212. The spigot member106a is any spigot member that would allow a supply or discharge conduit of the application at hand to be connected. In the example of **FIG. 3****,** the spigot member 106a is shown as a male spigot member.

The adapter 104 is in **FIG. 3** illustrated as a symmetrical male-male adapter. This adapter 104 is constructed to allow a first half to be fully inserted into the port 212a, while the other half is allowed to be fully inserted into a port of a further battery pack 300 (cf. **FIG. 2**). The adapter thus allows the heat-transfer medium to be transported between the packs 200, 300, while being fully protected within the ports.

The adapter 104 further comprises seal members 110 for preventing leakage of heat-transfer medium where the adapter 104 is arranged. The seal members 110 is in **FIG. 3** illustrated as O-rings.

The plug 108 in **FIG. 3** comprises a male part adapted to be arranged in the port 212b, and for preventing a flow of heat-transfer medium past the plug 108. The plug 108 is further provided with a seal member for preventing leakage, and with a locking ring for preventing loosening of the plug 108 from the pressure of the heat-transfer medium. The locking ring may be replaced with any other fastener suitable for securing the plug 108 to the port 212b.

**FIG. 4** illustrates a method 400 for thermal management in a battery pack 200 according to one example. The method 400 includes arranging S401 an adapter 104 to a first port 212a of the battery pack and arranging S402 a hose connector 106 to a second port 212b of the battery pack. The adapter 104 and the hose connector 106 are adapted to be interchangeably arranged to the first port 212a and the second port 212b, meaning that the adapter 104 and the hose connector 106 are constructed so that they could be arranged in both the first port 212a and the second port 212b.

The method 400 could further include arranging S403 a plug 108 to a third port 212c of the port arrangement 210, thus hindering a flow of heat-transfer medium through that port 212c. As with the adapter 104 and the hose connector 106, the plug is constructed such that it could be arranged to any of the ports 212a-c.

The method 400 could further include connecting S404 the adapter 104 to a port 312 of a further battery pack 300, top allow the heat-transfer medium to flow between the battery packs 200, 300.
**Example 1:** A thermal management arrangement (10) for a battery pack (200), the arrangement (10) comprising:
   a housing (204) arranged to accommodate the battery pack (200),
   a port arrangement (210) comprising at least one port (212), the port (212) being arranged to allow for a heat-transfer medium to flow between an interior (206) and exterior (208) of the housing (204),
   an adapter (104) arranged to be connected to the port (212) for allowing the heat-transfer medium to flow from the interior (206) of the housing (204) to an interior of a further housing arranged to accommodate a further battery pack, and
   a hose connector (106) arranged to be connected to the port (212) for allowing a heat-transfer medium supply hose to be connected to the port (210).
**Example 2:** The arrangement (10) of example 1, further comprising a plug (108) arranged to be connected to the port (212) for preventing the flow of heat-transfer medium through the port (212).
**Example 3:** The arrangement (10) of example 1, wherein the housing (204) arranged to accommodate the first battery pack (202) comprises four side sections (204a-d), a top section (204e) and a bottom section (204f), and wherein the port arrangement (210) comprises at least two ports (212a, 212b) arranged to allow the heat-transfer medium to flow through at least two different sections (212a, 212b) of the housing (204).
**Example 4:** The arrangement (10) of example 1, wherein the housing (204) arranged to accommodate the battery pack (200) comprises at least four ports (212a-d) arranged to allow the heat-transfer medium to flow through at least four different sections (204a-d) of the housing (204).
**Example 5:** The arrangement (10) of example 1, wherein each port (212a-b) is arranged at a location of two adjacent sections (204) where the two adjacent sections (204) form a corner of the housing (204).
**Example 6:** The arrangement (10) of example 1, wherein the adapter (104) is a male-male adapter.
**Example 7:** The arrangement (10) of example 1, wherein the adapter (104) comprises a seal member (110).
**Example 8:** The arrangement (10) of example 1, wherein the seal member (110) is an O-ring.
**Example 9:** The arrangement (10) of example 1, wherein the hose connector (106) comprises a spigot member (106a) adapted to be connected to a hose, and a connecting member (106b) adapted to be connected to the port (212), the connecting member being a male connecting member.
**Example 10:** The arrangement (10) of example 1, the port arrangement (210) being arranged to form part of the housing (204).
**Example 11:** A battery arrangement (100) comprising the thermal management arrangement (10) of any of claims 1-10 wherein the battery arrangement (100) comprises at least said further battery pack (300) arranged to be accommodated in said further housing, said further housing comprising a port arrangement (310), the adapter (104) being arranged to be connected to a port (312) of the port arrangement (310) of said further housing.
**Example 12:** A vehicle comprising the thermal management arrangement (10) according to example 1.
**Example 13:** A method (400) for thermal management in thermal management arrangement (10) in a battery pack (200), the thermal management arrangement (10) comprising:
   a housing (204) arranged to accommodate the battery pack (200),
   a port arrangement (210) comprising at least one port (212), the port (212) being arranged to allow for a heat-transfer medium to flow between an interior (206) and exterior (208) of the housing (204), the method (400) comprising:
      arranging (S100) an adapter (104) in a first port (212a) of the port arrangement (212) for allowing the heat-transfer medium to flow from the interior region (206) of the first battery pack to an interior region of a further battery pack (300), and
      arranging (S102) a hose connector (106) to a second port (212b) of the port arrangement (212) for allowing for a heat-transfer medium supply hose to be connected to the port (210).
      wherein the adapter (104) and the hose connector (106) are adapted to be interchangeably arranged to the first port (212a) and the second port (212b).
   **Example 14:** The method (400) of example 13, wherein the method further comprises arranging a plug (108) to a third port (212c) of the port arrangement (212) for preventing the flow of heat-transfer medium through the port (212c).
   **Example 15:** The method (400) of example 13, wherein the housing (204) arranged to accommodate the first battery pack (200) comprises four side sections (204a-d), a top section (204e) and a bottom section (204f), and wherein the port arrangement (210) comprises at least two ports (212a, 212b) arranged to allow the heat-transfer medium to flow through at least two different sections (212a, 212b) of the housing (204).
   **Example 16:** The method (400) of example 13, wherein the housing (204) arranged to accommodate the battery pack (200) comprises at least four ports (212a-d) arranged to allow the heat-transfer medium to flow through at least four different sections (204a-d) of the housing (204).
   **Example 17:** The method (400) of example 13, wherein each port (212a-b) is arranged at a location of two adjacent sections (204) where the two adjacent sections (204) form a corner of the housing (204).
   **Example 18:** The method (400) of example 13, wherein the adapter (104) is a male-male adapter.
   **Example 19:** The method (400) of example 13, wherein the hose connector (106) comprises a spigot member adapted to be connected to a hose, and a connecting member adapted to be connected to the port (212), the connecting member being a male connecting member.
   **Example 20:** The method (400) of example 13, wherein the battery pack (200) is connected to said further battery pack (300), arranged to be accommodated in said further housing, to form a battery arrangement (100), said further housing comprising a port arrangement (310), the adapter (104) being arranged to be connected to a port (312) of the port arrangement (310) of said further housing.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A thermal management arrangement (10) for a battery pack (200), the arrangement (10) comprising:
a housing (204) arranged to accommodate the battery pack (200),
a port arrangement (210) comprising at least one port (212), the port (212) being arranged to allow for a heat-transfer medium to flow between an interior (206) and exterior (208) of the housing (204),
an adapter (104) arranged to be connected to the port (212) for allowing the heat-transfer medium to flow from the interior (206) of the housing (204) to an interior of a further housing arranged to accommodate a further battery pack, and
a hose connector (106) arranged to be connected to the port (212) for allowing a heat-transfer medium supply hose to be connected to the port (212).

2. The thermal management arrangement (10) of claim 1, further comprising a plug (108) arranged to be connected to the port (212) for preventing the flow of heat-transfer medium through the port (212).

3. The thermal management arrangement (10) of any of claims 1-2, wherein the housing (204) arranged to accommodate the first battery pack (202) comprises four side sections (204a-d), a top section (204e) and a bottom section (204f), and wherein the port arrangement (210) comprises at least two ports (212a, 212b) arranged to allow the heat-transfer medium to flow through at least two different sections (212a, 212b) of the housing (204).

4. The thermal management arrangement (10) of claim 3, wherein the housing (204) arranged to accommodate the battery pack (200) comprises at least four ports (212a-d) arranged to allow the heat-transfer medium to flow through at least four different sections (204a-d) of the housing (204).

5. The thermal management arrangement (10) of any of claims 3-4, wherein each port (212a-b) is arranged at a location of two adjacent sections (204) where the two adjacent sections (204) form a corner of the housing (204).

6. The thermal management arrangement (10) of any of claims 1-5, wherein the adapter (104) is a male-male adapter.

7. The thermal management arrangement (10) of any of claims 1-6, wherein the adapter (104) comprises a seal member (110).

8. The thermal management arrangement (10) of claim 7, wherein the seal member (110) is an O-ring.

9. The thermal management arrangement (10) of any of claims 1-8, wherein the hose connector (106) comprises a spigot member (106a) adapted to be connected to a hose, and a connecting member (106b) adapted to be connected to the port (212), the connecting member being a male connecting member.

10. The thermal management arrangement (10) of any of claims 1-9, the port arrangement (210) being arranged to form part of the housing (204).

11. A battery arrangement (100) comprising the thermal management arrangement (10) of any of claims 1-10 wherein the battery arrangement (100) comprises at least said further battery pack (300) arranged to be accommodated in said further housing, said further housing comprising a port arrangement (310), the adapter (104) being arranged to be connected to a port (312) of the port arrangement (310) of said further housing.

12. A vehicle comprising the thermal management arrangement (10) according to any of claims 1-11.

13. A method (400) for thermal management in a thermal management arrangement (10) in a battery pack (200), the thermal management arrangement (10) comprising:
a housing (204) arranged to accommodate the battery pack (200),
a port arrangement (210) comprising at least one port (212), the port (212) being arranged to allow for a heat-transfer medium to flow between an interior (206) and exterior (208) of the housing (204), the method (400) comprising:
arranging (S401) an adapter (104) in a first port (212a) of the port arrangement (212) for allowing the heat-transfer medium to flow from the interior region (206) of the first battery pack to an interior region of a further battery pack (300), and
arranging (S402) a hose connector (106) to a second port (212b) of the port arrangement (212) for allowing for a heat-transfer medium supply hose to be connected to the port (212b).
wherein the adapter (104) and the hose connector (106) are adapted to be interchangeably arranged to the first port (212a) and the second port (212b).

14. The method (400) of claim 13, wherein the method further comprises arranging (S403) a plug (108) to a third port (212c) of the port arrangement (210) for preventing the flow of heat-transfer medium through the port (212c).

15. The method (400) of any of claims 13-14, wherein the housing (204) arranged to accommodate the first battery pack (200) comprises four side sections (204a-d), a top section (204e) and a bottom section (204f), and wherein the port arrangement (210) comprises at least two ports (212a, 212b) arranged to allow the heat-transfer medium to flow through at least two different sections (212a, 212b) of the housing (204).
